# EUROPÄISCHE PATENTSCHRIFT

(11) **EP 2 550 853 B1**
(45) Veröffentlichungstag und Bekanntmachung des Hinweises auf die Patenterteilung: **23.03.2016**
(21) Anmeldenummer: 12175311.5
(22) Anmeldetag: 06.07.2012
(51) Int. Cl.: A01F 15/08

(54) **Rundballenpresse**
Round baler
Presse à balles rondes

(30) Priorität: 27.07.2011 DE 102011079937
(43) Veröffentlichungstag der Anmeldung: 30.01.2013
(73) Patentinhaber: Deere & Company, Moline, IL 61265 (US)
(72) Erfinder: Gresset, Pascal, 25480 Pirey (FR); Zabe, Mickael, 70180 Roche et Raucourt (FR); Chapon, Emmanuel, 70100 Velet (FR)
(74) Vertreter: Reichert, Christian

(56) Entgegenhaltungen:
- EP-A1- 1 731 023
- EP-A1- 1 889 534
- US-A1- 2005 188 862
- US-A1- 2005 257 513

## Beschreibung

Die Erfindung betrifft eine Rundballenpresse mit einem Rahmen, einem am Rahmen ausgebildeten Pressraum zur Bildung eines Rundballens, einem zwischen dem Pressraum und einer Bodenfläche ausgebildeten Entladebereich und wenigstens einem im Entladebereich angeordneten Ablageelement, welches sich parallel zur Rotationsachse des Rundballens erstreckt und zum Abstützen des Rundballens während eines Entladevorgangs dient, wobei an dem Ablageelement eine elastische Schicht ausgebildet ist welche unter Einwirkung des Rundballens beim Entladevorgang elastisch verformbar ist.

Beim Entladen eines Rundballens aus dem Pressraum einer Rundballenpresse stellt sich jeweils das Problem der Kontrolle über dessen Bewegung. Insbesondere stellt sich dieses Problem bei Rundballen dar, die mit einem Netz oder Garn umwickelt sind und einem hochdynamischen Entladevorgang bzw. Entladeprozess unterliegen. Beim Entladevorgang wird der Rundballen in der Regel aus dem Pressraum gelöst und fällt beispielsweise auf eine Entladerampe, die mit Ablageelementen versehen ist, welche den Rundballen in eine kontrollierte Abrollbewegung überführen. Je nach Ausgestaltung und Anordnung des Entladebereichs erfährt der Rundballen eine oftmals extreme Richtungsänderung in seiner Bewegung, insbesondere bei hochdynamischen, schnellen Entladevorgängen, wie sie bei leistungsstarken, moderneren Rundballenpressen stattfinden. Eine derartige Rundballenpresse ist beispielsweise in der DE 10 2005 036 181 A1 offenbart. Die mit einer solchen extremen Richtungsänderungen für den Rundballen behafteten Entladevorgänge führen zu extremen Belastungen am Rundballen die oftmals zu Schäden am Rundballen, insbesondere zu Rissen im Netz oder im Garn führen, wenn der Rundballen auf die genannten Ablageelemente fällt und von einer nahezu senkrechten Entladebewegung in eine horizontale Entladebewegung bzw. Abrollbewegung überführt werden soll.

Um derartigen Schadensfällen entgegenzuwirken ist es beispielsweise von Rundballenpressen der Fa. WELGER bekannt, ein an einer Entladerampe ausgebildetes Stüzelement als Rolle auszubilden, die mittels Federn am Rahmen bzw. an einer Entladerampe gelagert ist, um einen Teil der Bewegungsenergie des Rundballens zu absorbieren. Eine derartige Ausbildung einer auf Federn gelagerten Rolle gestaltet sich jedoch als konstruktiv aufwändig, wartungsintensiv und anfällig.

Ferner wird in der EP 1 889 534 A1 eine Rundballenpresse offenbart, die ein Ablageelement in Form eines als Entladerampe ausgebildeten Abrollriemens aufweist. Die vorgeschlagene Entladerampe ermöglicht ein gefedertes Abfangen eines Rundballens beim Entladen, stellt sich jedoch insgesamt als konstruktiv aufwändig und in Hinsicht auf die Federungseigenschaften als verbesserungswürdig dar.

Die der Erfindung zugrunde liegende Aufgabe wird darin gesehen, eine Rundballenpresse der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Rundballenpresse der eingangs genannten Art derart ausgebildet, dass die elastische Schicht wenigstens teilweise von einer Abdeckung abgedeckt ist. Dadurch, dass der Rundballen beim Entladevorgang direkt oder indirekt auf eine elastische Schicht einwirkt, kann ein Teil der Bewegungsenergie kompensiert und die Belastung am Rundballen erheblich reduziert werden, so dass die oben genannten Schadensbilder am Rundballen ausbleiben. Der Rundballen wird damit in seiner Bewegung beim Entladevorgang abgefedert und eine durch das Ablageelement verursachte mechanische Beanspruchung einer äußeren Hülle bzw. einer Randschicht des Rundballens reduziert. Das Ablageelement kann als Teil einer am Rahmen der Rundballenpresse angelenkten Entladerampe ausgebildet oder direkt am Rahmen selbst befestigt sein. Das Ablageelement ist dabei im Entladebereich unterhalb des Pressraums angeordnet, so dass der Rundballen beim Entladen auf das Ablageelement fällt. Der Entladebereich beschreibt den gesamten Bereich, der beim Verlassen des Pressraums von dem Rundballen durchlaufen wird. Dazu gehören insbesondere eine Entladeöffnung, die den Pressraum öffnet und durch die der Ballen geführt wird, der Bereich in dem eine Entladerampe angeordnet ist, über welche der Rundballen auf die Bodenoberfläche geleitet wird sowie ein Bereich dazwischen, durch den der Rundballen entweder geführt wird oder sich aufgrund seiner Schwerkraft oder seines Bewegungsimpulses bewegt. Damit der Rundballen beim Entladevorgang aus einer nahezu senkrechten Bewegung in eine horizontale Bewegung überführt wird, kann das Ablageelement derart angeordnet sein, dass der auf das Ablageelement fallende Rundballen mit seiner Rotationsachse in Vorwärtsfahrtrichtung hinter dem Ablageelement liegt, so dass durch das Ablageelement ein auf den Rundballen gerichteter und entgegen der Vorwärtsfahrtrichtung wirkender Drehimpuls (Bewegungsimpuls) für den Rundballen generiert wird. Das Ablageelement kann jedoch auch mittig zur Rotationsachse oder derart angeordnet sein, dass der Rundballen mit seiner Rotationsachse in Vorwärtsfahrtrichtung vor dem Ablageelement liegt. Die Drehimpulsgebung kann dann beispielsweise durch zusätzliche Mittel erzwungen werden. Die elastische Schicht ist zudem wenigstens teilweise mit einer Abdeckung versehen .

Dies kann in Form einer Ummantelung, Schutzhülle oder Beschichtung erfolgen. Die Abdeckung bzw. Ummantelung oder Beschichtung dient zum Schutz der elastischen Schicht und kann beispielsweise als Rohr oder aus einem anderen hohlförmigen Körper bzw. aus einem das Ablageelement wenigstens teilweise umgebenden Körper ausgebildet sein. Auch eine entsprechend widerstandsfähige bzw. stabile Folie ist einsetzbar.

Das Ablageelement kann sich wenigstens über einen Teil der Breite des Rundballens, vorzugsweise über die gesamte Breite des Rundballens erstrecken, wobei auch partielle, über die Breite verteilte Abschnitte angeordnet sein können, so dass der Rundballen über seine Breite abschnittsweise abgestützt wird.

Das Ablageelement kann einen Profilträger umfassen, auf dem wenigstens teilweise die elastische Schicht ausgebildet ist. Der Profilträger kann dabei als Rohrprofil oder auch als Vollprofil ausgebildet sein und verschiedene Querschnitte aufweisen. So können L-, C-, I-, U-, oder auch geschlossene Rund- oder Rechteck-Profile zur Anwendung kommen. Auch nicht runde also ellypsen- oder ovalförmige oder auch mehreckige Querschnitte sind möglich.

Das Ablageelement kann eine Rolle umfassen, auf der wenigstens teilweise die elastische Schicht ausgebildet ist. Das Ablageelement kann dabei als Rundprofil, also als massive oder hohle Rolle ausgebildet sein und entsprechend eine Stange bzw. ein Rohr darstellen.

Das Ablageelement kann ferner auch ein Flachprofil umfassen, wie eine Platte oder ein Blech, auf der wenigstens teilweise die elastische Schicht ausgebildet ist. Das Flachprofil kann dabei als Blech oder auch als massive Platte ausgebildet sein.

Die elastische Schicht kann aus einem Schaumstoff, einem Elastomer oder einem anderen elastischen Material gebildet werden. Einsetzbar sind dabei Schaumstoffe bzw. Schäume oder gummi- bzw. kautschukhaltige Materialien, die unter dem Gewicht des Rundballens eine entsprechende Elastizität aufweisen und sich unter Einfluss der kinetischen Energie des Rundballens verformen können. Auch andere Materialien mit gleichen oder ähnlichen elastischen Eigenschaften sind dabei einsetzbar.

Um einen höheren Abfederungseffekt zu erzielen bzw. um die mechanische bzw. kinetische Beanspruchung des Rundballens noch weiter zu reduzieren, können mehrere Ablageelemente parallel zueinander angeordnet sein, die gemeinsam den Rundballen beim Entladevorgang abstützen bzw. abfedern.

Anhand der Zeichnung, die mehrere Ausführungsbeispiele der Erfindung zeigen, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Seitenansicht einer erfindungsgemäßen Rundballenpresse in einer geschlossenen Stellung mit einer ersten Ausführungsform einer im Entladebereich ausgebildeten Entladerampe mit Ablageelement,
- Fig. 2: eine schematische perspektivische Seitenansicht der Entladerampe aus Figur 1 mit einer ersten Ausführungsform für das Ablageelement,
- Fig. 3: eine schematische perspektivische Seitenansicht der Entladerampe aus Figur 1 mit einer zweiten Ausführungsform für das Ablageelement und
- Fig. 4: eine schematische perspektivische Seitenansicht der Entladerampe aus Figur 1 mit einer dritten Ausführungsform für das Ablageelement.

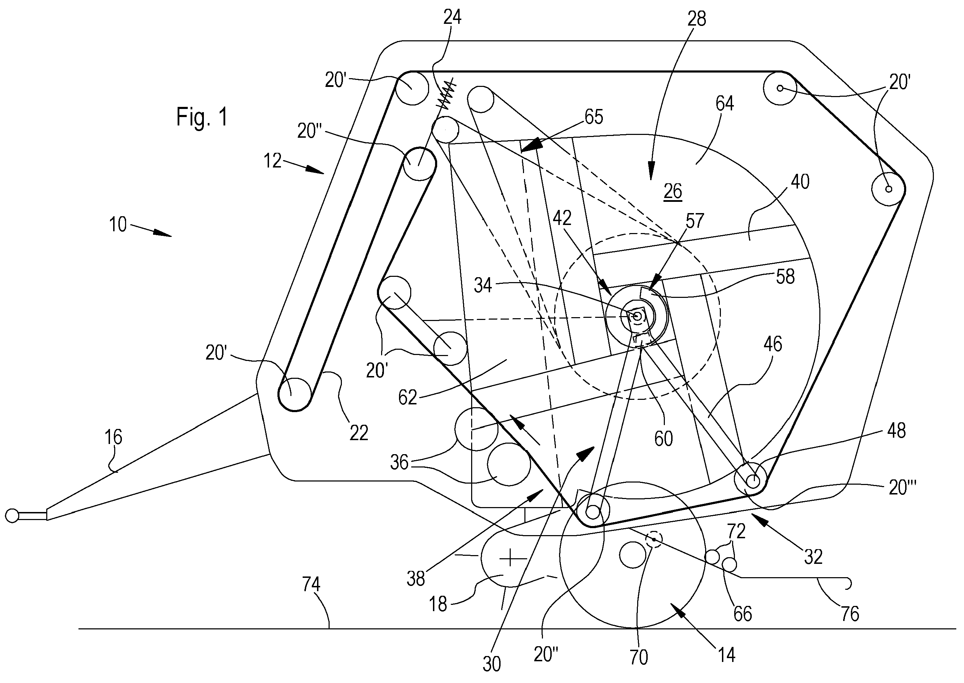

Eine in Figur 1 gezeigte Rundballenpresse 10 enthält einen Rahmen 12, ein Fahrgestell 14, eine Deichsel 16, eine Aufnahmevorrichtung 18, Rollen 20 (20', 20", 20"'), Presselemente 22, eine Spannvorrichtung 24, Seitenwände 26, einen durch die Seitenwände 26 und die Presselemente 22 begrenzten Pressraum 28, Schwenkteile 30 sowie einen Entladebereich 32.

Die Rundballenpresse 10 ist in dem dargestellten Ausführungsbeispiel mit einem durch bewegliche Presselemente 22 in der Größe veränderbaren Pressraum 28 versehen, kann aber auch mit einem größenunveränderlichen Pressraum 28 mit ortsfesten Presselementen versehen werden. In dem Pressraum 28 wird vom Boden aufgenommenes Erntegut zu einem sogenannten Rundballen geformt, der mit seinen Stirnseiten auf die Seitenwände 26 drückt.

Der Rahmen 12 stellt sich als ein Schweiß- und/oder Schraubzusammenbau dar, an dem alle Komponenten der Rundballenpresse 10 befestigt sind, der sich auf dem Fahrgestell 14 abstützt und der mit der Deichsel 16 an ein nicht gezeigtes Zugfahrzeug anschließbar ist. Der Rahmen 12 trägt unter anderem nicht dargestellte Verkleidungsteile, einige der Rollen 20, die Seitenwände 26 und die Schwenkteile 30. Der Rahmen 12 umschließt den von den Seitenwänden 26 und den Presselementen 22 umgebenen Bereich weiträumig.

Das Fahrgestell 14 besteht in nicht näher bezeichneter Weise aus einer Achse und Rädern, auf denen der Rahmen 12 ruht.

Die Deichsel 16 greift an der Vorderseite des Rahmens 12 starr oder höhenverstellbar an.

Die Aufnahmevorrichtung 18 ist in üblicher Weise als eine sogenannte Pick-Up ausgebildet und an den Rahmen 12 höhenverstellbar angeschlossen. Der Aufnahmevorrichtung 18 kann eine ebenfalls an sich bekannte Schneidvorrichtung nachgeordnet werden. Die Aufnahmevorrichtung 18 nimmt auf dem Boden abgelegtes Gut auf und gibt es über eine gegebenenfalls vorhandene Schneidvorrichtung in den Pressraum 28 weiter, wo es zu einem zylindrischen Rundballen geformt wird.

Einige der Rollen 20 sind ortsfest in dem Rahmen 12 drehbar gelagert und werden mit 20' bezeichnet, eine andere der Rollen 20 ist gegen die Kraft einer nicht näher bezeichneten Feder verstellbar, damit die Presselemente 22 dem wachsenden Ballendurchmesser nachgeben können, und ist mit 20" bezeichnet; wieder andere Rollen 20 sind auf Schwenkteilen 30 um eine Schwenkachse 34 schwenkbar. Diese Rollen 20 werden mit 20'" gekennzeichnet und sind derart breit ausgebildet und verlaufen zueinander parallel, dass die Presselemente 22 darüber ablaufen und den Pressraum 28 umschließen können. Neben den Rollen 20 sind auch Walzen 36 vorgesehen, die sich oberhalb einer Eingangsöffnung 38 in den Pressraum 28 befinden. Die Walzen 36 dienen als sogenannte Starterrollen beim Ballenbildungsbeginn, auf denen sich ein Teil des Gewichts des Rundballens abstützen kann.

Die Presselemente 22 sind als parallel zueinander verlaufende Riemen ausgebildet, die den Pressraum 28 auf seiner Breite im Wesentlichen bedecken. Statt der Ausbildung als Riemen könnte auch eine als Stabkettenförderer oder als breites Band gewählt werden, wie dies ebenfalls bekannt ist. In diesem Fall wäre also nur ein Presselement vorhanden, was aber ebenfalls unter den Schutzbereich fallen soll. Die Presselemente 22 sind endlos und werden dadurch in Umlaufbewegung versetzt, dass sie reibschlüssig oder formschlüssig auf wenigstens einer antreibbaren Rolle 20 aufliegen. Die Presselemente 22 bilden im Bereich der Eingangsöffnung 38 eine Brücke, die sich mit zunehmendem Erntegut zu einer nach innen ausweitenden Schlaufe formt und den Rundballen umgibt. Die Presselemente 22 werden dadurch unter Spannung gehalten, dass sie über die lageveränderliche Rolle 20" geführt werden.

Die Spannvorrichtung 24 wird in bekannter Weise dadurch gebildet, dass die Rolle 20" auf einem nicht dargestellten Arm, Schlitten oder dergleichen gegen die Kraft einer Feder geführt ist und stets eine Schlaufe der Presselemente 22 gespannt hält.

Die Seitenwände 26 nehmen im Wesentlichen in einer Sicht auf Figur 1 die Form eines "D" ein, wobei der rückwärtige und in Figur 1 rechte Endbereich einen Bogen bildet, der im Wesentlichen der Umfangslinie des fertigen Rundballens folgt, d.h. einem Teil eines runden Kreisbogens. Die Seitenwände 26 sind grundsätzlich zweistückig ausgebildet und enthalten einen vorderen und einen rückwärtigen Abschnitt 62 und 64, die schwenkbar miteinander verbunden sind. Jeder Abschnitt 62, 64 kann aber durchaus aus mehreren Teilen zusammengesetzt werden. Die Seitenwände 26 nehmen einen Abstand zu dem Rahmen 12 ein können somit nach außen ausgelenkt werden, wie dies nachfolgend beschrieben wird. Die rückwärtigen Abschnitte 64 der Seitenwände 26 sind mittels Versteifungsstreben 40 biegesteif ausgebildet, wobei die Versteifungsstreben 40 aufgeschraubt oder aufgeschweißt werden können. Gemäß der Darstellung in Figur 1 verlaufen die Versteifungsstreben 40 nahezu sternförmig mit Bezug auf die Schwenkachse 34 und verlaufen tangential an dieser mit geringem Abstand vorbei, um schließlich mehr oder weniger senkrecht aufeinander zu stoßen. Aufgrund dieses Verlaufs schließen sie eine in diesem Ausführungsbeispiel viereckige Kammer 42 ein.

In ihrem vorderen Endbereich sind die rückwärtigen Abschnitte 64 über ein (nicht dargestelltes) Gelenk und die vorderen Abschnitte 62 mit dem Rahmen 12 begrenzt schwenkbar verbunden. Der Anschluss des rückwärtigen Abschnitts 64 an den vorderen Abschnitt 62 erfolgt im Wesentlichen entlang einer mehr oder weniger vertikalen Linie mit einer Gelenkachse 65 im Bereich des vorderen Abschnitts 62, d.h. im Bereich des Pressraums 28. Im Bereich der Schwenkachse 34 ist jede Seitenwand 26 bzw. deren rückwärtiger Abschnitt 64 auf einer Achse geführt, die an dem Rahmen 12 starr befestigt ist und zugleich als Schwenkachse 34 für die Schwenkteile 30 dient.

Anders als in dem gezeigten Ausführungsbeispiel kann der Anschluss der Seitenwand 26 oder Seitenwände 26 auch entlang einer oberen mehr oder weniger waagrechten oder leicht schrägen Linie erfolgen, so dass sich eine nach unten öffnende Divergenz der Seitenwände 26 ergibt, wenn der Rundballen ausgeworfen wird.

Der Pressraum 28 ist in seiner Größe veränderlich und wird am Anfang, d.h. bei leerem Pressraum 28, von einem ungefähr dreieckigen zylindrischen Raum zwischen der Aufnahmevorrichtung 18 und dem Pressmittel 22 und seitlich von den Seitenwänden 26 begrenzt. Mit zunehmend zugeführtem Erntegut erweitert sich der Pressraum 28 und nimmt schließlich einen Querschnitt ein, der im rückwärtigen Bereich der Form der Seitenwände 26 folgt.

Die Schwenkteile 30 sind in diesem Ausführungsbeispiel auf jeder Seite mit einem oder mehreren radial zu der Schwenkachse 34 verlaufenden Arm(en) 46 und einer oder mehreren an dessen/deren radial außen liegenden Ende angebrachten quer dazu verlaufenden Traverse(n) 48 versehen. Am Ende der Arme 46 ist jeweils eine Rolle 20'" vorgesehen. Die Schwenkteile 30 sind mit dem radial innenliegenden Ende jedes Arms 46 schwenkbar auf der Achse 34 angeordnet. Die Stellung der Arme 46 wird mittels eines Antriebs (nicht gezeigt) gesteuert, der einen Motor und pro Schwenkteil 30 einen Schwenkantrieb enthält. Der Motor kann in seinen jeweiligen Stellungen gebremst werden und hält die Arme 46 entsprechend ortsfest. Die Steuerung der Schwenkteile 30 erfolgt derart, dass der vordere Schwenkteil 30 während der Ballenbildungsphase verstellt wird, um bei der Bildung eines Ballenkerns zu helfen, und dass der rückwärtige Schwenkteil 30 eine untere Lage einnimmt, während der Rundballen gebildet wird, und eine obere Lage, wenn er ausgeworfen wird. Die untere Endlage des Schwenkteils 30 ist Figur 1 dargestellt, wobei die obere Endlage eine Lage entsprechend einer Drehung des Schwenkteils entgegen den Uhrzeigersinn um ca. 90 bis 180 darstellt, derart, dass der Entladebereich 32 geöffnet wird und ein gepresster Ballen durch Verschwenken des Schwenkteils 30 freigegeben wird. Es wird darauf hingewiesen, dass der vordere Schwenkteil 30 nicht unbedingt erforderlich ist.

Eine Drückevorrichtung 57 enthält eine ansteigende Fläche 58 und ein Folgeglied 60 und dient dazu, zum und beim Auswerfen des Rundballens den Druck und damit die Reibung der Seitenwände 26 auf dessen Stirnflächen zu verringern, so dass der Rundballen leichter aus dem Pressraum 28 entladen werden kann.

Die ansteigende Fläche 58 ist auf einem zu der Schwenkachse 34 konzentrisch verlaufenden Kreisbogen gelegen und an der Außenseite beider Seitenwände 26 befestigt, wenn es auch ausreichend wäre, nur eine ansteigende Fläche, d. h. an einer Seitenwand 26 vorzusehen. In dem vorliegenden Ausführungsbeispiel ist die ansteigende Fläche 58 aus einem gebogenen Stahlkeil gebildet, der gleichmäßig ansteigend innerhalb der Kammer 42 auf die Seitenwände 26 aufgeschraubt ist.

Das Folgeglied 60 ist auf der der Längsmittenebene der Rundballenpresse 10 zugelegenen Seite des Arms 46 des rückwärtigen Schwenkteils 30 vorgesehen und als Gleitfläche ausgebildet. Zur Minimierung der Reibung werden die Reibflächen geschmiert; alternativ kann das Folgeglied 60 auch als Rad, Rolle, Kugel oder dergleichen drehendes Glied ausgebildet werden. Das Folgeglied 60 ist derart angeordnet, dass es bei einer Drehung des Schwenkteils 30 um die Schwenkachse 34 eine runde Kreisbahn beschreibt und sich auf der ansteigenden Fläche 58 bewegt. Vorzugsweise befindet sich das Folgeglied 60 stets in Anlage auf der ansteigenden Fläche 58.

Das Folgeglied 60 liegt auf der höchsten Erhebung der ansteigenden Fläche 58 auf, wenn sich die rückwärtigen Schwenkteile 30 in ihrer unteren Endstellung befinden - sh. Figur 1 - und der Rundballen erzeugt werden kann. Wenn die Schwenkteile 30 in ihre obere Endstellung gebracht werden, in der der Rundballen aus dem Pressraum 28 entlassen werden kann, wird das Folgeglied 60 zu der niedrigsten Stelle der ansteigenden Fläche 58 bewegt. Der Unterschied zwischen der höchsten und der niedrigsten Stelle kann z.B. circa 20 bis 50 mm betragen.

Sobald in dem Pressraum 28 ein Rundballen gebildet ist, wird der rückwärtige Schwenkteil 30 angehoben, worauf sich aufgrund des in dem Pressraum 28 herrschenden Drucks ausgehend von dem gepressten Erntegut die rückwärtigen Abschnitte 64 der Seitenwände 26 nach außen bewegen. Infolgedessen verringert sich die Reibung zwischen der Innenseite der Seitenwände 26 und den Stirnflächen des Rundballens und letzterer fällt aufgrund der Schwerkraft aus dem Pressraum 28. Sobald der Rundballen den Pressraum 28 verlassen hat und die Rundballenpresse 10 soweit weiterbewegt worden ist, dass der rückwärtige Schwenkteil 30 wieder abgesenkt werden kann, erfolgt eine Schwenkbewegung des rückwärtigen Schwenkteils 30 in der entgegensetzten Richtung, so dass das Folgeglied 60 zur größten Erhebung der ansteigenden Fläche 58 bewegt wird und dabei die rückwärtigen Abschnitte 64 der Seitenwände 26 nach innen drückt.

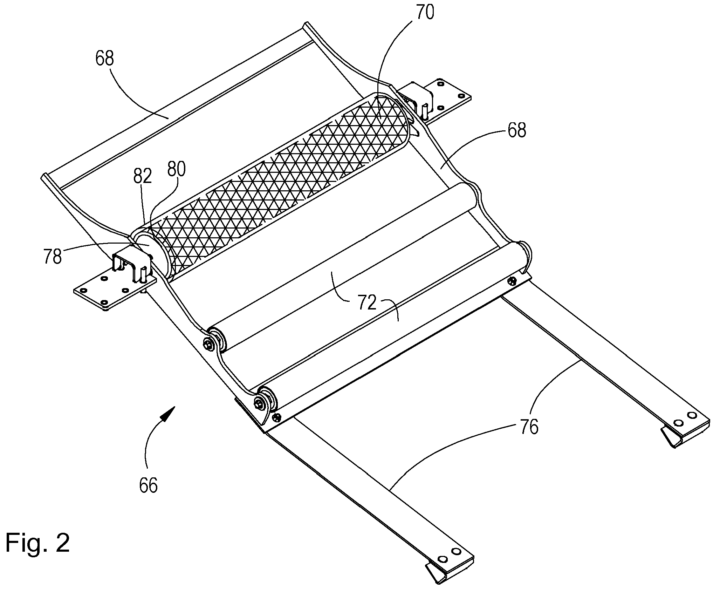

Der Entladebereich 32 umfasst eine Entladerampe 66, wie sie genauer in den Figuren 2 bis 4 dargestellt ist.

Die Entladerampe 66 umfasst einen Rampenrahmen 68 auf dem ein sich quer zur Rundballenpresse 10 erstreckendes Ablageelement 70, sowie weitere, sich quer zur Ballenpresse erstreckende und als Rollen ausgebildete Ablagelemente 72 befestigt sind. Der Rampenrahmen 68 ist mit einem sich in Längsrichtung der Rundballenpresse 10 erstreckendes Gefälle versehen und dient dazu einen ausgeworfenen Ballen kontrolliert auf eine Bodenoberfläche 74 zu führen, wobei das Gefälle zum hinteren Bereich (entgegen der Fahrtrichtung) der Rundballenpresse 10 abfällt. Am unteren Bereich der Entladerampe 66 sind Federstreben 76 angebracht, die sich, nachdem der Rundballen über die Ablageelemente 70, 72 geführt wurde, unter dem Gewicht des Rundballens elastisch verformen und den Rundballen auf die Bodenoberfläche 74 federnd ablegen.

Figur 2 zeigt eine erste Ausführungsform für das Ablageelement 70. Das Ablageelement 70 ist als Rolle 78 ausgebildet, vorzugsweise als Stahlrolle. Die Rolle 78 ist an beiden Enden am Rampenrahmen 68 drehbar oder fest gelagert. Das Ablageelement 70 ist so angeordnet, dass der Rundballen beim Entladevorgang auf die Rolle 78 fällt. Um einen herabfallenden Rundballen in Richtung der abfallenden Entladerampe 66 zu bewegen ist das Ablagelement 70 vorzugsweise in Fahrtrichtung vor der Rotationsachse des Rundballens angeordnet. Die Rolle 78 ist von einer elastischen Schicht 80 (in den Figuren schraffiert dargestellt) umgeben, welche vorzugsweise aus Schaumstoff besteht, jedoch auch aus einem anderen elastischen Material wie beispielsweise Gummi oder einem anderen Elastomer ausgebildet werden kann. Ferner ist zum Schutz der elastischen Schicht 80 eine Abdeckung 82 vorgesehen, die in dem in Figur 2 dargestellten Ausführungsbeispiel als Rohr, vorzugsweise aus Kunststoff, ausgebildet ist und über die elastische Schicht 80 schwimmend geführt ist und diese vollständig umgibt. Alternativ ist als Abdeckung 82 auch eine entsprechend widerstandsfähige Folie einsetzbar, die um die elastische Schicht 80 gewickelt ist. Die Abdeckung 82 ist derart ausgebildet, dass sie den mechanischen Belastungen durch den Rundballen standhält und die elastische Schicht 80 vor Beschädigungen schützt. Die Abdeckung 82 ist als relativ stabiles Rohr schwimmend auf der elastischen Schicht 80 bzw. auf der Rolle 78 gelagert. Unter Einwirkung des Gewichts des Rundballens wird die Abdeckung 82 bzw. das Rohr aus einer bezüglich der Rolle 78 zentralen Lage heraus nach unten gedrückt, so dass die elastische Schicht 80 durch die obere Innenseite des Rohres entsprechend auf der Oberseite verformt bzw. zusammendrückt wird. Somit wird ein Teil der durch den Rundballen eingebrachten Energie abgefedert. Sobald der Rundballen das Ablageelement 70 verlassen hat wird das Kunststoffrohr durch die Entspannung der elastischen Schicht 80 wieder in die zentrale Lage bewegt. Bei Verwendung einer Folie als Abdeckung 82 muss diese entsprechend verformbar ausgebildet sein, so dass die durch die elastische Schicht 80 ausgeführten federnden Bewegungen nicht behindert werden.

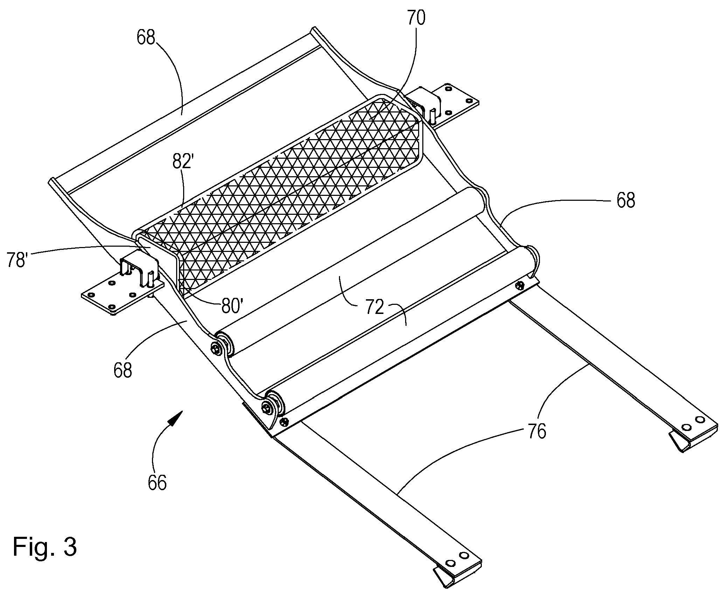

Figur 3 zeigt eine zweite Ausführungsform für das Ablageelement 70, welches im Wesentlichen der Ausführungsform aus Figur 2 entspricht und sich nur in der Form des Ablageelements 70 unterscheidet. Das Ablageelement 70 ist hier als Rechteckprofil 78' ausgebildet, vorzugsweise als Stahlprofil. Auch hier ist eine elastische Schicht 80' vorgesehen, die in gleicher Weise wie oben beschrieben von einer Abdeckung 82' geschützt ist, welche jedoch entsprechend dem Profil des Ablageelements 70 angepasst ist.

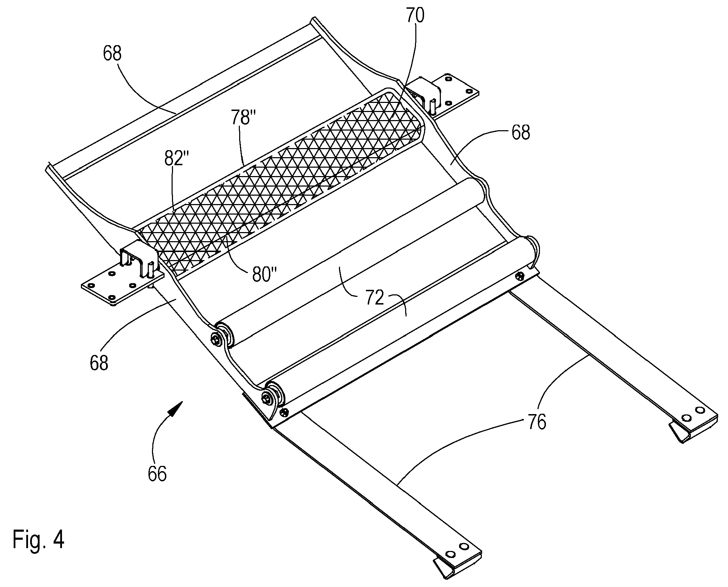

Figur 4 zeigt eine dritte Ausführungsform für das Ablageelement 70, welches im Wesentlichen der Ausführungsform aus Figur 2 und 3 entspricht und sich ebenfalls nur in der Form des Ablageelements 70 unterscheidet. Das Ablageelement 70 ist hier als Flachprofil 78" ausgebildet, vorzugsweise als Stahlplatte. Auch hier ist eine elastische Schicht 80" vorgesehen, die von einer Abdeckung 82" geschützt ist, welche jedoch entsprechend der Form des Ablageelements 70 angepasst ist und ebenfalls plattenförmig ausgebildet ist, beispielsweise als Kunststoffplatte. Um die Drehbewegung des Rundballens in Richtung der abfallenden Entladerampe 66 zu unterstützen ist das Flachprofil 78" mit einem leichten Gefälle versehen.

## Patentansprüche

1. Rundballenpresse (10) mit einem Rahmen (12), einem am Rahmen ausgebildeten Pressraum (28) zur Bildung eines Rundballens, einem zwischen dem Pressraum (28) und einer Bodenfläche (74) ausgebildeten Entladebereich (32) und wenigstens einem im Entladebereich (32) angeordneten Ablageelement (70), welches sich parallel zur Rotationsachse des Rundballens erstreckt und zum Abstützen des Rundballens während eines Entladevorgangs dient, wobei an dem Ablageelement (70) eine elastische Schicht (80, 80', 80") ausgebildet ist welche unter Einwirkung des Rundballens beim Entladevorgang elastisch verformbar ist, **dadurch gekennzeichnet, dass** die elastische Schicht (80, 80', 80") wenigstens teilweise von einer Abdeckung (82, 82`, 82") abgedeckt ist.

2. Rundballenpresse (10) nach Anspruch 1, **dadurch gekennzeichnet, dass** sich das Ablageelement (70) wenigstens über einen Teil der Breite des Rundballens erstreckt.

3. Rundballenpresse (10) nach Anspruch 1 oder 2, **dadurch gekennzeichnet, dass** das Ablageelement (70) einen Profilträger (78') umfasst, auf dem wenigstens teilweise die elastische Schicht (80') ausgebildet ist.

4. Rundballenpresse (10) nach Anspruch 1 oder 2, **dadurch gekennzeichnet, dass** das Ablageelement (70) eine Rolle (78) umfasst, auf der wenigstens teilweise die elastische Schicht (80) ausgebildet ist.

5. Rundballenpresse (10) nach Anspruch 1 oder 2, **dadurch gekennzeichnet, dass** das Ablageelement (70) ein Flachprofil (78") umfasst, auf der wenigstens teilweise die elastische Schicht (82") ausgebildet ist.

6. Rundballenpresse (10) nach einem der vorherigen Ansprüche, **dadurch gekennzeichnet, dass** die elastische Schicht (80, 80', 80") aus einem Schaumstoff, einem Elastomer oder einem anderen elastischen Material gebildet wird.

7. Rundballenpresse (10) nach einem der vorherigen Ansprüche, **dadurch gekennzeichnet, dass** mehrere Ablageelemente (70) parallel zueinander angeordnet sind.

## Claims

1. Round baler (10) with a frame (12), a pressing chamber (28) formed on the frame to form a round bale, a discharge region (32) formed between the pressing chamber (28) and a base surface (74), and at least one handling element (70) which is arranged in the discharge region (32) and which extends parallel to the rotation axis of the round bale and serves to support the round bale during a discharge process, wherein on the handling element (70) is formed an elastic layer (80, 80', 80'') which is elastically deformable under the effect of the round bale during the discharge process, **characterized in that** the elastic layer (80, 80', 80 ") is covered at least partially by a cover (82, 82', 82'').

2. Round baler (10) according to Claim 1, **characterized in that** the handling element (70) extends over at least part of the width of the round bale.

3. Round baler (10) according to Claim 1 or 2, **characterized in that** the handling element (70) comprises a profile carrier (78') on which the elastic layer (80') is formed at least partially.

4. Round baler (10) according to Claim 1 or 2, **characterized in that** the handling element (70) comprises a roller (78) on which the elastic layer (80) is formed at least partially.

5. Round baler (10) according to Claim 1 or 2, **characterized in that** the handling element (70) comprises a flat profile (78 ") on which the elastic layer (82 ") is formed at least partially.

6. Round baler (10) according to any of the preceding claims, **characterized in that** the elastic layer (80, 80', 80 ") is formed from a foam, an elastomer or another elastic material.

7. Round baler (10) according to any of the preceding claims, **characterized in that** several handling elements (70) are arranged parallel to each other.

## Revendications

1. Presse à balles rondes (10) comprenant un cadre (12), un espace de pressage (28) réalisé au niveau du cadre pour former une balle ronde, une région de déchargement (32) réalisée entre l'espace de pressage (28) et une surface du sol (74) et au moins un élément de dépose (70) disposé dans la région de déchargement (32), lequel s'étend parallèlement à l'axe de rotation de la balle ronde et sert à supporter la balle ronde pendant une opération de déchargement, une couche élastique (80, 80', 80'') étant réalisée sur l'élément de dépose (70), laquelle est déformable élastiquement sous l'action de la balle ronde lors de l'opération de déchargement, **caractérisée en ce que** la couche élastique (80, 80', 80 ") est au moins en partie recouverte par un recouvrement (82, 82', 82'').

2. Presse à balles rondes (10) selon la revendication 1, **caractérisée en ce que** l'élément de dépose (70) s'étend au moins sur une partie de la largeur de la balle ronde.

3. Presse à balles rondes (10) selon la revendication 1 ou 2, **caractérisée en ce que** l'élément de dépose (70) comprend un support profilé (78') sur lequel est réalisée au moins en partie la couche élastique (80').

4. Presse à balles rondes (10) selon la revendication 1 ou 2, **caractérisée en ce que** l'élément de dépose (70) comprend un rouleau (78) sur lequel est réalisée au moins en partie la couche élastique (80).

5. Presse à balles rondes (10) selon la revendication 1 ou 2, **caractérisée en ce que** l'élément de dépose (70) comprend un profilé plat (78") sur lequel est réalisée au moins en partie la couche élastique (82").

6. Presse à balles rondes (10) selon l'une quelconque des revendications précédentes, **caractérisée en ce que** la couche élastique (80, 80', 80'') est formée d'une mousse, d'un élastomère ou d'un autre matériau élastique.

7. Presse à balles rondes (10) selon l'une quelconque des revendications précédentes, **caractérisée en ce que** plusieurs éléments de dépose (70) sont disposés parallèlement les uns aux autres.
